# EUROPEAN PATENT SPECIFICATION

(11) **EP 1 763 648 B1**
(45) Date of publication and mention of the grant of the patent: **08.09.2010**
(21) Application number: 05764053.4
(22) Date of filing: 04.07.2005
(51) Int. Cl.: F17C 3/02, F17C 13/00

(54) **CONTAINER FOR STORING LIQUEFIED GAS**
BEHÄLTER ZUR LAGERUNG VON FLÜSSIGGAS
RÉSERVOIR POUR GAZ LIQUÉFIÉ

(30) Priority: 06.07.2004 EP 04254047
(43) Date of publication of application: 21.03.2007
(73) Proprietor: Shell Internationale Research Maatschappij B.V., 2596 HR Den Haag (NL)
(72) Inventor: FELIUS, Tanno Maarten, NL-2596 HR The Hague (NL)
(74) Representative: Matthezing, Robert Maarten
(86) International application number: PCT/EP2005/053165
(87) International publication number: WO 2006/003192

(56) References cited:
- FR-A- 2 105 710
- GB-A- 1 258 193
- US-A- 3 158 459
- US-A- 3 339 783
- US-A- 3 341 050

## Description

The present invention relates to a thermally insulated container for storing a liquefied gas, such as liquefied natural gas (LNG), liquefied nitrogen, oxygen or carbon dioxide or liquefied hydrogen. Suitably the liquefied gas is stored in the container at atmospheric pressure.

Several kinds of thermally insulated containers are known from practice. Usually, a container contains a structural outer shell, an inner tank to contain the liquefied gas (and any vapours) and insulation provided between the structural outer shell and the inner tank to reduce the leakage of heat into the interior of the container.

Usually, to be able to contain the cold liquefied gas, the structural outer shell of such a container is made from a special material such as nickel steel or prestressed reinforced concrete.

An example of a thermally insulated container is given in US 3 112 043 and in US 334 1050. US 3 112 043 discloses a ship for transporting liquefied gases at about atmospheric pressure. The ship is provided with a rigid shell as an inner hull, the rigid shell being internally lined with heat-insulating material. In the space enclosed by the heat-insulated rigid shell inner tanks, made from aluminium or stainless steel, are present. The inner tanks contain the cold liquid and the vapours.

A problem of the known containers for storing liquefied gas is that they are usually heavy, as they contain a substantial amount of metal. Further the used metal (e.g. nickel steel) is usually from a very high quality, as a result of which the containers are expensive.

A further problem is that it is time-consuming to construct the known containers as the metallic containment layers must be welded. This problem is even more pertinent if a material such as nickel steel is used, as this material is difficult to weld and requires experienced welding personnel.

It is an object of the present invention to minimize the above problems.

It is a further object to provide a safe but light-weight container for storing liquefied gas that can be constructed easily and quickly.

One or more of the above or other objects is achieved according to the present invention by providing a thermally insulated container for storing liquefied gas, according to claim 1.

According to the invention it has been surprisingly found that a light-weight container for storing and transporting liquefied gases can be provided that is easy and in an economic way to construct.

An important advantage of the container according to the present invention is that the container is leak free. Even in the unlikely event that the first panel layer would leak, the second liquid barrier will withstand the leaked-through fluid (i.e. liquid or vapour), as there is no fluid communication between on the one hand the through going passages for partially receiving the second connectors and on the other hand the anchor openings for partially receiving the first connectors.

Preferably, the container is substantially metal-free. To this end both the outer shell as well as the thermally insulating panel layers, liquid barriers and connectors are preferably made from a material other than metal. It goes without saying that in the latter case still some metallic connecting means may be present.

The outer shell may be made from any material suitable as a load barrier. Examples are metal, concrete, etc. As mentioned above it is preferably made from a cheap, non-metallic material.

The first and second liquid barriers are usually made from liquid- and vapour-tight materials. Preferably the first and second liquid barriers comprise a plastic material such as polyurethane or epoxy or a combination thereof. If desired, the liquid barriers may be reinforced, e.g. by incorporation of glass fibers. Usually, the liquid barriers are thinner than the panel layers and have a thickness of about 3-8 mm. Of course, other thicknesses may be used.

The first liquid barrier is a continuous layer, the second layer usually also is. To that end the liquid barriers may e.g. be applied by spray coating or the like. Of course, the coating may also be applied by using a brush or a trowel.

The first and second panel layers are made from panels of a thermally insulating material. Preferably the first and second panel layers comprise foamed plastic material. Preferably the first and second panel layers are made from a plastic material that can withstand the load of the liquefied gas contained in the container. Suitable examples of the plastic material are PVC and polyurethane foam. The material used preferably can also resist the pneumatic pressure of the liquefied gas stored in the container.

Suitably the first and second panel layers have a thickness of at least 5 cm.

The first and second connectors may have various forms. Preferably the connectors are made from a non-metallic material. Usually, the connectors are studs. Preferably, the stud is provided with a screw thread, to easily fix the stud in the anchor openings of the one or more second panel layers. If only one second panel layer is present, the second connectors provide the connection between the second layer and the outer shell; the outer shell will then comprise anchor openings to partially receive the second connectors.

Preferably the second panel layer is directly fixed to the outer shell. It is even more preferred that no empty spaces are present between the first liquid barrier and the outer shell, whereby the container can be constructed as small as possible for a given liquefied gas storage volume.

Further it is preferred that the through going passages in the first panel layer and at least one of the second panel layers comprise recesses at the front sides of the respective panel layers. These recesses function to at least partially receive any washers, nuts or the like being present to fix those ends of the connectors being at the front sides of the panels. As a result the liquid barrier applied on the respective front side may be substantially planar.

Also it is preferred that the recesses have been filled with insert pieces. Further it is preferred that the insert pieces have been fixed in the respective recesses by use of an adhesive. The insert pieces - that may have any suitable form - may contribute in making the front side of the respective panel layer substantially planar.

Hereafter the invention will be further illustrated with reference to the following non-limiting drawings. Herein shows:
Figure 1 schematically a lower corner of a thermally insulated container for storing liquefied gas constructed according to the present invention;
Figure 2 detail II of Figure 1 on a larger scale;
Figure 3 detail III of Figure 1 on a larger scale; and
Figure 4 detail IV of Figure 1 on a larger scale.

The same reference numbers refer to similar structural elements.

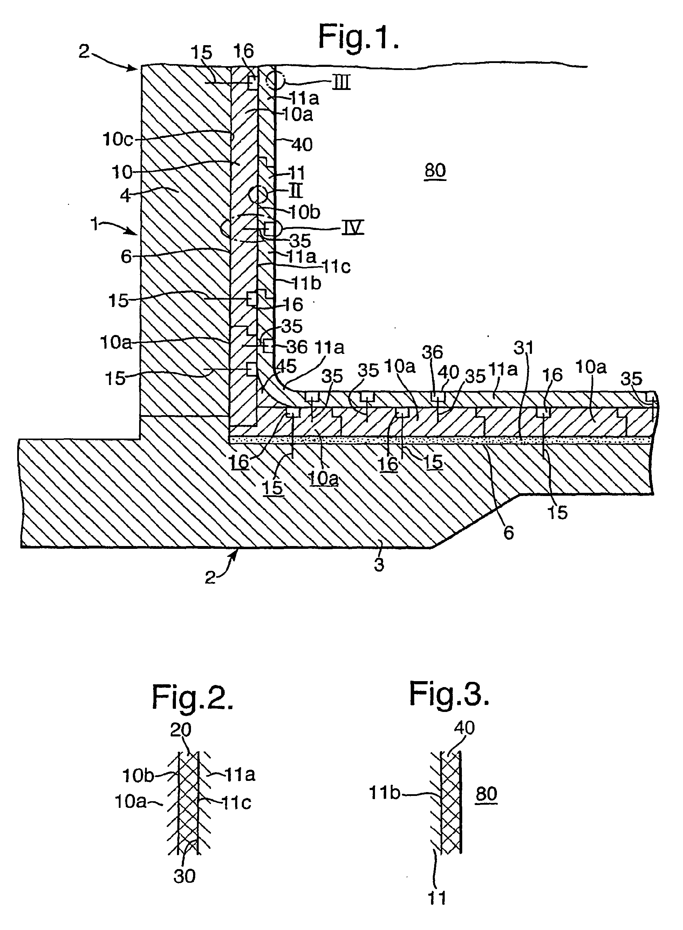

Reference is now made to Figure 1. The invention provides a thermally insulated container 1 for storing liquefied gas 80, which container 1 comprises a load bearing structural outer shell 2. The structural shell 2 comprises a base plate 3 and a side wall 4. In the example shown in the drawing the base plate 3 and the side wall 4 are made of concrete. The structural shell 2 has an inner surface 6. For the sake of completeness it is observed that the container 1 includes a roof (not shown) that is insulated and can form a part of the structural shell 2.

The container 1 further includes at least two thermally insulating containment layers, i.e. first panel layer 11 ('inner containment layer') and second panel layer 10 ('outer containment layer'), which are secured to the inner surface 6 of the structural shell 2. It goes without saying that more than one outer containment layers 10 may be present, if desired.

Each containment layer 10 and 11 includes panels of a foamed plastics material having a front face facing the interior of the container 1 and a back face. The panels of the outer containment layer 10 are referred to with reference numerals 10a, their front faces with reference numeral 10b and their back faces with 10c. The panels of the inner containment layer 11 are referred to with reference numerals 11a, their front faces with 11b and their back faces with 11c. For the sake of clarity not all faces of the panels 10a and 11a are referred to with a reference numeral.

Further the container 1 comprises two vapour- and liquid-tight barriers, viz. a first liquid barrier 40 being in contact with the liquefied gas 80 contained in the container 1 (see also Figure 3) and a second liquid barrier 20 between the inner containment layer 11 and outer containment layer 10 (see also Figure 2).

Further the container 1 comprises first connectors 35 such as studs for connecting the inner containment layer 11 to the outer containment layer 10 and second connectors 15 such as studs for connecting the outer containment layer 11 to the outer shell 2.

To be able to receive the studs 35,15 the inner containment layer 11 and outer containment layer 10 are provided with through going passages (not shown). Further the outer containment layer 10 and the outer shell are provided with anchor openings (not shown) to receive those parts of the studs 15,35 being faced away from the interior and thereby fixing the inner containment layer 11, the outer containment layer 10 and the outer shell 2 to one another.

An important advantage of the container 1 according to the present invention is that the container 1 is leak free and vapour tight. Further, the outer shell 2 of the container 1 will not be exposed to low temperatures; as a result the material selection of the outer shell 2 of the container 1 is less stringent and thus more economical. Even in the unlikely event that the first liquid barrier 40 would leak, the second liquid barrier 20 will withstand the leaked-through fluid, as there is no fluid communication between on the one hand the through going passages for partially receiving and anchoring the second studs 15 and on the other hand the anchor openings for partially receiving the first studs 35.

To this end, the second liquid barrier 20 preferably has been fixed (e.g. by spraycoating) to the outer containment layer 10 in such a way that the second liquid barrier 20 cannot be removed from the outer containment layer 10 without destroying the layers. Preferably, the same applies for the first liquid barrier 40 and the inner containment layer 11.

Further the container 1 is substantially metal-free (the studs 15, 35 may be made from metal, although they may also be made from a plastic material) resulting in a light-weight container.

An exemplary and non-limiting method of constructing the thermally insulated container 1 for storing liquefied gas 80 comprising the containment layers 10 and 11 secured to the inner surface 6 of the structural shell 2 is discussed hereafter.

The first step of the method is providing the inner surface 6 of the structural shell 2 with a plurality of second connectors 15 such as studs. The studs 15 are aligned in mutually perpendicular directions and the distance between adjacent studs 15 is preferably so selected that there are at least two studs 15 available to secure one panel 10a. A way of providing the inner surface 6 with the studs 15 comprises placing anchor openings such as receiving nuts (not shown) provided with suitable protective covers in the setting concrete of the outer shell 2, and to use (preferably threaded) studs 15 of which the ends can be fixed in any suitable manner (e.g. glued, screwed or using expansion bolts or the like) into the receiving nuts.

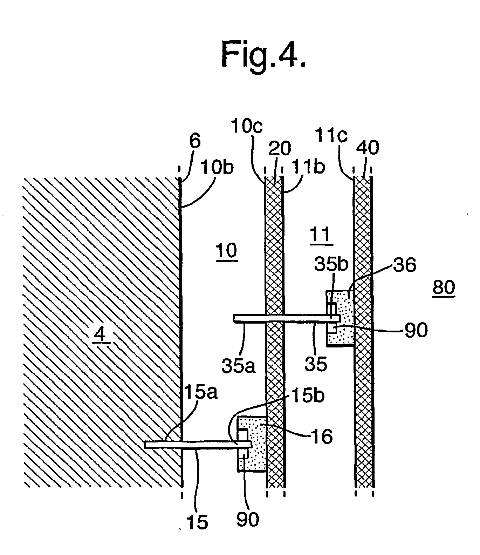

Subsequently a layer of adhesive (not shown) may be deposited on the inner surface 6 of the structural shell 2. The panels 10a are provided with one through going passage (not shown) per stud 15. The passage extends from the back face 10c to a cylindrical recess 16 in the front face 10b. For the sake of clarity not all recesses 16 have been referred to with a reference numeral. These panels 10a are put in position. They are joined to the structural shell 2 by applying fixing means (e.g. fixing ring 90 in Fig. 4) to the ends of the studs 15 in the recesses 16 and by allowing the adhesive on the inner surface 6 to set.

Then the front faces 10b of the panels 10a outer containment layer 10 are provided with a plurality of studs 35. The studs 35 are also aligned in mutually perpendicular directions, wherein the distance between adjacent studs 35 is preferably so selected that there are at least two studs 35 available to secure one panel 11a.

A way of providing the front faces 10b with the studs 35 comprises placing anchor openings such as receiving nuts (not shown) provided with suitable protective covers in the panels 10a when they are manufactured, and to use threaded studs of which the ends can be screwed into the receiving nuts. Preferably the first studs 35 are not in a direct line with the second studs 15 to enhance liquid and vapour tightness and to avoid thermal bridges through the insulation panels.

After having placed the studs 35, a continuous vapour- and liquid-tight barrier 20 is provided on the front faces 10b of the panels 10a to obtain the outer containment layer 10. In this way a fluid-tight connection is made around the studs 35, the receiving nuts (not shown) and the surrounding outer containment layer 10. The barrier 20 is shown more clearly in Figure 2.

In order to apply the second liquid barrier 20 it is preferred that the surface on which it is applied is smooth. However, the front faces 10b of the panels 10a are not smooth (there are recesses 16). Therefore, suitably, pre-fabricated foam insert pieces (not shown) are inserted in the recesses so as to create a smooth continuous surface on the front faces 10b of the panels 10a.

Thus the outer containment layer 10 comprises panels 10a that are secured to the inner surface 6 of the structural shell 2, and a continuous vapour- and liquid-tight barrier 20. The inner surface of the outer containment layer 10 is referred to with the reference numeral 30 (see Figure 2).

Then a layer of adhesive (not shown) may be deposited on the inner surface 30 of the outer containment layer 10. The panels 11a are provided with one passage (not shown) per stud. The passage extends from the back face 11c to a cylindrical recess 36 in the front face 11b. For the sake of clarity not all recesses 36 have been referred to with a reference numeral. These panels 11a are put in position. They are joined to the structural shell 2 via the outer containment layer 10 by applying fixing means (e.g. a fixing ring 90 as shown in Fig. 4) to the ends of the studs 35 in the recesses 36 and by allowing the adhesive on the inner surface 30 to set.

Then a continuous vapour- and liquid-tight barrier 40 is provided on the front faces 11b of the panels 11a.

In order to apply the barrier 40 it is preferred that the surface on which it is applied is smooth. However, the front faces 11b of the panels 11a are not smooth (there are recesses 36). Therefore, suitably, pre-fabricated foam insert pieces (not shown) are inserted in the recesses 36 so as to create a smooth continuous surface on the front faces 11b of the panels 11a.

Thus the inner containment layer 11 consists of panels 11a that are secured to the inner surface 6 of the structural shell 2, and a continuous vapour- and liquid-tight barrier 40.

Suitably the panels 11a of the inner containment layer are staggered with respect to the panels 10a of the outer containment layer so that the panels 11a overlap the recesses 16 of the panels 10a.

Suitably, the panels 11a of the inner containment layer 11 at corners (i.c. at the bottom) of the container 1 are curved, and these panels 11a are supported by supporting corner pieces 45. In the embodiment of Figure 1, wherein a cylindrical LNG storage container 1 is shown, the corner pieces 45 typically form an annular ring having a curved inner surface. The person skilled in the art will readily understand that these panels 11a placed at corners of the container 1 as well as the corner pieces 45 may have other suitable shapes, if desired.

The inner containment layer 11 is, during normal operation into contact with the liquefied gas stored in the thermally insulated container 1 according to the present invention.

Suitably the panels 10a and 11a are made of a suitable foam, preferably polyvinyl chloride or polyurethane foam, and the panels are covered by a polymer skin. To reduce the chances on leaking, the panels 10a and 11a have stepped side surfaces for shiplap engagement of the panels.

Figures 2, 3 and 4 show details II, III and IV of Figure 1 on a larger scale, respectively. For the sake of clarity the presence of a second stud 15 has also been shown in Fig. 4, although Figure 1 does not suggest that detail IV (i.e. Fig. 4) contains one.

As can be seen in Fig. 4, the anchor opening in the front face 10c of the outer containment layer 10 is filled by the end 35a of the first stud 35 being faced away from the interior of the container 1; thus the anchor opening in the outer containment layer 10 partially receives the first stud 35. Preferably both the anchor opening in the outer containment layer 10 as well as the end 35a of the stud 35 are provided with a screw thread (not shown).

Similarly, as shown in Figure 4, the side wall 4 of the outer shell 2 also comprises an anchor opening which is filled by the end 15a of the second stud 15, the end 15a being faced away from the interior of the container 1.

The through going passage in inner containment layer 11 is for a part filled by the first stud 35 and for a part formed by the recess 36. The first stud 35 is fixed at the end 35b facing the interior of the container 1 by a fixing ring 90. The first stud 35 may be further fixed by an adhesive that is filled in the recess 36 of the inner containment layer 11. Further, if desired, an insert piece (not shown) may have been provided in the recess 36. This insert piece may have been pre-shaped or may be formed in situ, e.g. from a foamed material.

The person skilled in the art will readily understand that the container 1 according to the present invention can be varied widely without departing from the scope of the appended claims.

As an example, the inner surface 6 of the structural shell 2 can be provided with an additional continuous vapour barrier (not shown). This additional vapour barrier is then applied after the second studs 15 are provided. Then the first step of the method comprises providing the plurality of studs 15, and subsequently providing the inner surface 6 of the structural shell 2 with a vapour barrier (not shown).

In addition a protective levelling layer 31 can be laid on the base plate 3 before the panels 10a of the outer containment layer are placed on the base plate 3. The protective layer 31 may be made of e.g. dry sand or levelling concrete.

Also, the panels 10a and 11a may be shaped such that the front faces 10b and back faces 11c form channels at selected points between the layers 10 and 11 e.g. for facilitating purging with inert gas before commissioning or decommissioning of the container 1. These channels may further be used during use of the container 1 to monitor the liquid and vapour tightness of the liquid barriers 20 and 40.

The invention provides a surprisingly simple thermally insulated container that can be constructed in a quick an economic way. The container can be constructed as large cylindrical land containers, but it can also be constructed in the form of prismatic containers that are applied on vessels or on gravity-based structures. In addition, the present invention allows constructing containers that have the size of a freight container. The latter containers filled with liquefied gas can easily and safely be transported to any location where the gas can be used.

## Claims

1. A thermally insulated container (1) for storing liquefied gas (80), the container (1) at least comprising:
- a load bearing structural outer shell (2);
- on the inside of the outer shell (2) a continuous first liquid barrier (40), the first liquid barrier (40) during use being in contact with the liquefied gas (80);
- between the first liquid barrier (40) and the structural outer shell (2) a first thermally insulating panel layer (11), the first panel layer having a front face (11b) facing the interior of the container (1) and a back face (11c);
- between the first panel layer (11) and the outer shell a second liquid barrier (20);
- between the second liquid barrier (20) and the outer shell (2) at least one second thermally insulating panel layer (10), the second panel layer (10) having a front face (10b) facing the interior of the container (1) and a back face (10w) ;
- first connectors (35) for connecting the first panel layer (11) to one of the second panel layers (10);
- second connectors (15) for connecting at least one of the second panel layers (10) to the outer shell (2); wherein the first panel layer (11) and at least one of the second panel layers (10) comprise through going passages for partially receiving the first and second connectors (35,15);
wherein at least one of the second panel layers (10) comprises anchor openings in the front face (10b) for partially receiving the first connectors (35);
wherein in the at least one second panel layer (10) no fluid contact exists between on the one hand the through going passages for partially receiving the second connectors (15) and on the other hand the anchor openings for partially receiving the first connectors (35);
wherein the second panel layer (11,10) comprise foamed plastic material,
and **characterized in that** the first panel layer comprise foamed plastic material.

2. Container (1) according to claim 1, wherein the first and second liquid barriers (40,20) comprise plastic material.

3. Container (1) according to claim 1 or 2, wherein the first and second panel layers (11,10) can withstand the load of the liquefied gas (80) contained in the container (1).

4. Container (1) according to one or more of the preceding claims, wherein the first and second panel layers (11,10) have a thickness of at least 5 cm.

5. Container (1) according to one or more of the preceding claims, wherein the panels (11a) of the first panel layer (11) have been positioned in a staggered relationship with respect to the panels (10a) of the second panel layer (10).

6. Container (1) according to one or more of the preceding claims, wherein at least one of the second panel layers (10) is directly fixed to the outer shell (2).

7. Container (1) according to one or more of the preceding claims, wherein the through going passages in the first panel layer (11) and at least one of the second panel layers (10) comprise recesses (16,36) at the front sides (11b, 10b) of the respective panel layers (11,10).

8. Container (1) according to claim 7, wherein the recesses (36,16) have been filled with insert pieces.

9. Container (1) according to claim 8, wherein the insert pieces have been fixed in the respective recesses (36,16) by use of an adhesive.

## Patentansprüche

1. Wärmeisolierter Behälter (1) zur Lagerung von verflüssigtem Gas (80), wobei der Behälter (1) zumindest aufweist:
- eine lasttragende strukturelle äußere Schale (2);
- an der Innenseite der äußeren Schale (2) eine kontinuierliche erste Flüssigkeitsbarriere (40), wobei die erste Flüssigkeitsbarriere (40) während des Gebrauches in Kontakt mit dem verflüssigten Gas (80) ist;
- zwischen der ersten Flüssigkeitsbarriere (40) und der strukturellen äußeren Schale (2) eine erste Wärmeisolier-Panellage (11), wobei die erste Panellage eine Vorderseite (11b), die dem Inneren des Behälters (1) zugekehrt ist, und eine Rückseite (11c) aufweist;
- zwischen der ersten Panellage (11) und der äußeren Schale eine zweite Flüssigkeitsbarriere (20);
- zwischen der zweiten Flüssigkeitsbarriere (20) und der äußeren Schale (2) zumindest eine zweite Wärme-isolier-Panellage (10), wobei die zweite Panellage (10) eine Vorderseite (10b), die dem Inneren des Behälters (1) zugekehrt ist, und eine Rückseite (10c) aufweist;
- erste Verbinder (35) zum Verbinden der ersten Panellage (11) mit einer der zweiten Panellagen (10);
- zweite Verbinder (15) zum Verbinden zumindest einer der zweiten Panellagen (10) mit der äußeren Schale (2); wobei die erste Panellage (11) und zumindest eine der zweiten Panellagen (10) Durchgänge zur teilweisen Aufnahme der ersten und zweiten Verbinder (35, 15) aufweisen;
wobei zumindest eine der zweiten Panellagen (10) Verankerungsöffnungen in der Vorderseite (10b) zur teilweisen Aufnahme der ersten Verbinder (35) aufweist;
wobei in zumindest einer der zweiten Panellagen (10) kein Fluidkontakt zwischen einerseits den Durchgängen zur teilweisen Aufnahme der zweiten Verbinder (15) und anderseits den Verankerungsöffnungen zur teilweisen Aufnahme der er-sten Verbinder (35) existiert;
wobei die zweite Panellage (11, 10) geschäumtes Kunststoffmaterial aufweist, und **dadurch gekennzeichnet ist, daß** die erste Panellage geschäumtes Kunststoffmaterial aufweist.

2. Behälter (1) nach Anspruch 1, bei welchem die ersten und zweiten Flüssigkeitsbarrieren (40, 20) Kunststoffmaterial umfassen.

3. Behälter (1) nach Anspruch 1 oder 2, bei welchem die er-sten und zweiten Panellagen (11, 10) der Last des in dem Behälter (1) enthaltenen verflüssigten Gases (80) standhalten können.

4. Behälter (1) nach einem oder mehreren der vorhergehenden Ansprüche, bei welchem die erste und die zweite Panellage (11, 10) eine Dicke von zumindest 5 cm haben.

5. Behälter (1) nach einem oder mehreren der vorhergehenden Ansprüche, bei welchem die Panele (11a) der ersten Panellage (11) in gestaffelter Beziehung zu den Panelen (10a) der zweiten Panellage (10) positioniert sind.

6. Behälter (1) nach einem oder mehreren der vorhergehenden Ansprüche, bei welchem zumindest eine der zweiten Panellagen (10) direkt an der äußeren Schale (2) befestigt ist.

7. Behälter (1) nach einem oder mehreren der vorhergehenden Ansprüche, bei welchem die Durchgangsöffnungen in der er-sten Panellage (11) und in zumindest einer der zweiten Panellagen (10) Ausnehmungen (16, 36) an der Vorderseite (11b, 10b) der entsprechenden Panellagen (11, 10) aufweisen.

8. Behälter (1) nach Anspruch 7, bei welchem die Ausnehmungen (36, 16) mit Einsatzstücken gefüllt sind.

9. Behälter (1) nach Anspruch 8, bei welchem die Einsatzstükke in den entsprechenden Ausnehmungen (36, 16) unter Verwendung von Klebstoff fixiert sind.

## Revendications

1. Réservoir isolé thermiquement (1) pour stocker du gaz liquéfié (80), le réservoir (1) comprenant au moins :
- une coque externe structurelle porteuse (2) ;
- à l'intérieur de la coque externe (2), une première barrière de liquide continue (40), la première barrière de liquide (40) étant en contact pendant l'utilisation avec le gaz liquéfié (80) ;
- entre la première barrière de liquide (40) et la coque externe structurelle (2), une première couche de panneau isolante thermiquement (11), la première couche de panneau ayant une face avant (11b) faisant face à l'intérieur du réservoir (1) et une face arrière (11c) ;
- entre la première couche de panneau (11) et la coque externe, une seconde barrière de liquide (20) ;
- entre la seconde barrière de liquide (20) et la coque externe (2), au moins une seconde couche de panneau isolante thermiquement (10), la seconde couche de panneau (10) ayant une face avant (10b) faisant face à l'intérieur du réservoir (1) et une face arrière (10c) ;
- des premiers éléments de liaison (35) pour relier la première couche de panneau (11) à une des secondes couches de panneau (10) ;
- des seconds éléments de liaison (15) pour relier au moins une des secondes couches de panneau (10) à la coque externe (2) ; la première couche de panneau (1) et au moins une des secondes couches de panneau (10) comprenant des passages traversants destinés à recevoir en partie les premier et second éléments de liaison (35, 15) ;
dans lequel au moins une des secondes couches de panneau (10) comprend des ouvertures d'ancrage dans la face avant (10b) destinées à recevoir en partie les premiers éléments de liaison (35) ;
dans lequel dans l'au moins une seconde couche de panneau (10), il n'existe aucun contact fluide entre d'une part, les passages traversants destinés à recevoir en partie les seconds éléments de liaison (15) et d'autre part, les ouvertures d'ancrage destinées à recevoir en partie les premiers éléments de liaison (35) ;
dans lequel la seconde couche de panneau (10) est constituée d'une matière plastique expansée, et **caractérisé en ce que** la première couche de panneau est constituée d'une matière plastique expansée.

2. Réservoir (1) selon la revendication 1, dans lequel les première et seconde barrières de liquide (40, 20) sont constituées d'une matière plastique.

3. Réservoir (1) selon la revendication 1 ou 2, dans lequel les première et seconde couches de panneau (11, 10) peuvent supporter la charge du gaz liquéfié (80) contenu dans le réservoir (1).

4. Réservoir (1) selon une ou plusieurs des revendications précédentes, dans lequel les première et seconde couches de panneau (11, 10) ont une épaisseur d'au moins 5 cm.

5. Réservoir (1) selon une ou plusieurs des revendications précédentes, dans lequel les panneaux (11a) de la première couche de panneau (11) ont été positionnés selon une relation étagée par rapport aux panneaux (10a) de la seconde couche de panneau (10).

6. Réservoir (1) selon une ou plusieurs des revendications précédentes, dans lequel au moins une des secondes couches de panneau (10) est fixée directement à la coque externe (2).

7. Réservoir (1) selon une ou plusieurs des revendications précédentes, dans lequel les passages traversants dans la première couche de panneau (11) et au moins une des secondes couches de panneau (10) comprennent des évidements (16, 36) sur les côtés avant (11b, 10b) des couches de panneau (11, 10) respectives.

8. Réservoir (1) selon la revendication 7, dans lequel les évidements (36, 16) ont été remplis d'éléments d'insertion.

9. Réservoir (1) selon la revendication 8, dans lequel les éléments d'insertion ont été fixés dans les évidements (36, 16) respectifs par l'utilisation d'un adhésif.
